# EUROPÄISCHE PATENTANMELDUNG

(11) **EP 3 287 760 A1**
(43) Veröffentlichungstag der Anmeldung: **28.02.2018**
(21) Anmeldenummer: 17185093.6
(22) Anmeldetag: 07.08.2017
(51) Int. Cl.: G01M 1/32, G01M 1/16, G01M 1/34, G01M 1/04, B26D 1/143

(54) **VEFAHREN ZUM HERSTELLEN UND AUSWUCHTEN EINES KUTTERMESSERSATZES**

(30) Priorität: 23.08.2016 DE 102016115599
(71) Anmelder: ASTOR Schneidwerkzeuge GmbH, 15859 Storkow (DE)
(72) Erfinder: Baschin, Hendrik, 15859 Storkow (DE)
(74) Vertreter: Gulde & Partner

(57) **Zusammenfassung**

Die Erfindung betrifft ein Verfahren zum Herstellen eines Einzelmessersatzes (10) mit wenigstens zwei Einzelmessern (11) für ein Rotationsmessersystem (20), wobei das Verfahren die folgenden Schritte aufweist:
- Mechanisches Verbinden (102) des Einzelmessersatzes (10) mit einer Aufnahme (12) zum Fixieren des Einzelmessersatzes (10);
- Bestimmen (104) einer gegebenenfalls aufgrund des Einzelmessersatzes (10) vorhandenen Unwucht; und
- Auswuchten (106) des Einzelmessersatzes (10) wenn die Unwucht größer als eine vorbestimmte, zulässige Unwucht ist, mittels eines Materialauf- und/oder Materialabtrags an wenigstens einem der Einzelmesser (11).

Ferner betrifft die Erfindung ein Verfahren (200) zum Herstellen eines Rotationsmessersystems (20) mit einem Messerkopf (22) und wenigstens einem Einzelmessersatz (10).

Zudem betrifft die Erfindung einen Einzelmessersatz (10) umfassend wenigstens zwei Einzelmesser (11) für ein Rotationsmessersystem (20) sowie ein Rotationsmessersystem (20) mit einem Messerkopf (22) und wenigstens einem Einzelmessersatz (10). Ferner betrifft die Erfindung eine Wuchtmaschine.

## Beschreibung

Die Erfindung betrifft ein Verfahren zum Herstellen eines Einzelmessersatzes mit wenigstens zwei Einzelmessern für ein Rotationsmessersystem. Ferner betrifft die Erfindung ein Verfahren zum Herstellen eines Rotationsmessersystems mit einem Messerkopf und wenigstens einem Einzelmessersatz. Zudem betrifft die Erfindung einen Einzelmessersatz für ein Rotationsmessersystem und ein Rotationsmessersystem mit einem Messerkopf und wenigstens einem Einzelmessersatz. Ferner betrifft die Erfindung eine Wuchtmaschine zum Bestimmen einer gegebenenfalls vorhandenen Unwucht.

Rotationsmessersysteme umfassen mehrere Einzelmesser und werden insbesondere in Kuttern eingesetzt. Ein Rotationsmessersystem für Kutter wird auch als Kuttermessersystem bezeichnet, wobei die Einzelmesser dann Kuttermesser genannt werden. Kutter sind Maschinen zum Zerkleinern von Lebensmitteln, z. B. Fleisch, wie sie beispielsweise in der Lebensmittelindustrie eingesetzt werden. Derartige Rotationsmessersysteme rotieren im Betrieb mit Drehzahlen von mehreren tausend Umdrehungen pro Minute. Um Schwingungen zu verhindern wurden bisher alle Einzelmesser eines Rotationsmessersystems auf dasselbe Gewicht (also die gleiche Masse) geschliffen oder so sortiert, dass die Einzelmesser das gleiche Gewicht aufweisen. Anschließend werden die Einzelmesser auf einen Messerkopf des Rotationsmessersystems, welcher als Träger für die Einzelmesser dient, montiert.

Trotz aller Sorgfalt hat sich herausgestellt, dass dennoch im Betrieb eines schnelllaufenden Kutters Schwingungen und daraus resultierend Messerbrüche auftreten können.

Der Erfindung liegt nun die Aufgabe zugrunde, diesem Problem abzuhelfen.

Erfindungsgemäß wird diese Aufgabe durch ein Verfahren zum Herstellen eines Einzelmessersatzes mit wenigstens zwei Einzelmessern für ein Rotationsmessersystem gelöst. Das Verfahren umfasst die folgenden Schritte:
- Mechanisches Verbinden des Einzelmessersatzes mit einer Aufnahme zum Fixieren des Einzelmessersatzes;
- Bestimmen einer gegebenenfalls aufgrund des Einzelmessersatzes vorhandenen Unwucht; und
- Auswuchten des Einzelmessersatzes wenn die Unwucht größer als eine vorbestimmte, zulässige Unwucht ist, mittels eines Materialauf- und/oder Materialabtrags an wenigstens einem der Einzelmesser.

Der Erfindung liegt die Erkenntnis zu Grunde, dass auch wenn jedes Einzelmesser des Rotationsmessersystems die gleiche Masse aufweist und der Messerkopf für sich um seine vorgesehene Rotationsachse keine Unwucht aufweist, dennoch eine Unwucht des Rotationsmessersystems als Ganzes auftreten kann. Es wurde herausgefunden, dass dies daran liegt, dass selbst wenn jedes Einzelmesser eines Rotationsmessersystems die gleiche Masse aufweist, die Schwerpunkte der Einzelmesser dennoch nicht in jedem der Einzelmesser an derselben Position im Einzelmesser angeordnet sein können. Durch die untereinander abweichenden Positionen der Schwerpunkte der Einzelmesser kann es nun zu einer Unwucht des Rotationsmessersystems mit den damit verbundenen Schwingungen kommen.

Nach dem Auswuchten des Einzelmessersatzes kann der Einzelmessersatz von der Aufnahme gelöst werden. Die mechanische Verbindung des Einzelmessersatzes mit einer Aufnahme kann also rückgängig gemacht werden, um den ausgewuchteten Einzelmessersatz gegebenenfalls seiner weiteren Verwendung zuzuführen.

Durch das Bestimmen der gegebenenfalls vorhandenen Unwucht einer Einheit aus der Aufnahme mitsamt dem Einzelmessersatz und dem gegebenenfalls anschließenden Auswuchten dieser Einheit wird ein Einzelmessersatz hergestellt, welcher Schwingungen im Betrieb des Rotationsmessersystems effektiv verhindert oder zumindest verringert. Somit werden Gesamtschwingungen z. B. eines Kutters in welchem das Rotationsmessersystem zum Einsatz kommt, und die Gefahr von Messerbrüchen stark reduziert.

Das mechanische Verbinden der wenigstens zwei Einzelmesser des Einzelmessersatzes mit der Aufnahme bezeichnet dabei ein Befestigen oder Montieren der Einzelmesser an und/oder in der Aufnahme, z. B. ein Einsetzen in die Aufnahme. Die Einzelmesser werden dabei insbesondere formschlüssig mit der Aufnahme verbunden.

Zum Bestimmen einer gegebenenfalls aufgrund des Einzelmessersatzes vorhandenen Unwucht weist die Aufnahme um eine vorgesehene Rotationsachse der Aufnahme typischerweise keine Unwucht auf.

Eine Anordnung des Einzelmessersatzes bezüglich der Aufnahme entspricht insbesondere einer vorgesehenen Anordnung des Einzelmessersatzes bezüglich des Messerkopfes des Rotationsmessersystems. Dadurch wird gewährleistet, dass das Rotationsmessersystem nach dem Einbau des für sich gewuchteten Einzelmessersatzes keine Unwucht aufweist.

Der Einzelmessersatz wird bezüglich der Aufnahme insbesondere derart angeordnet, dass durch den Einzelmessersatz keine Unwucht entstehen würde, wenn die Einzelmesser jeweils die gleiche Masse und jeweils die gleiche Schwerpunktsposition aufweisen würden. Somit kann eine allein aufgrund der Anordnung der Einzelmesser relativ zur Aufnahme entstehende Unwucht verhindert werden.

Vorzugsweise sind die Einzelmesser des Einzelmessersatzes derart angeordnet, dass sie bezüglich einer Rotationsachse der Aufnahme um einen Abstandswinkel verdreht zueinander angeordnet sind, wobei der Abstandswinkel 360 Grad dividiert durch die Anzahl der wenigstens zwei Einzelmesser beträgt. Der Abstandswinkel würde beispielsweise bei einem Einzelmessersatz mit zwei Messern 180 Grad und bei einem Einzelmessersatz mit drei Einzelmessern 120 Grad betragen. Dadurch weisen die Einzelmesser einen Abstandswinkel auf, bei welchem sich die Massenkräfte der Einzelmesser weitestgehend aufheben.

Bevorzugt ist vorgesehen, dass die Einzelmesser des Einzelmessersatzes derart angeordnet sind, dass sie, insbesondere flach, innerhalb einer Ebene rechwinkelig zu einer Rotationsachse der Aufnahme angeordnet sind. Dadurch werden dynamische Unwuchten verhindert oder zumindest reduziert.

Das Bestimmen der gegebenenfalls vorhandenen Unwucht erfolgt insbesondere auf einer Wuchtmaschine. Bei der Unwucht handelt es sich typischerweise um eine statische Unwucht, es kann aber auch eine dynamische Unwucht bestimmt werden. Beim Bestimmen der Unwucht versetzt die Wuchtmaschine die Einheit aus Aufnahme und Einzelmessern (also eine Einheit aus der Aufnahme und dem Einzelmessersatz) in Rotation. Dazu ist die Aufnahme dazu ausgebildet, mit einer Antriebswelle der Wuchtmaschine mechanisch verbunden zu werden. Die Antriebswelle der Wuchtmaschine um die die Rotation erfolgt, ist mit Sensoren ausgestattet. Eine Auswerteelektronik errechnet aus den gemessenen Werten der an der Achse auftretenden Kräfte die Unwucht und insbesondere auch die Position an welcher ein Materialauf- oder Materialabtrag erfolgen muss, um die Unwucht zu beseitigen. Ferner kann die Auswerteelektronik auch die Masse errechnen, welche mittels des Materialauf- oder Materialabtrags von den Einzelmessern entfernt oder aufgebracht werden muss, um die Unwucht zu beseitigen. Die Sensoren umfassen insbesondere Kraft- und/oder Beschleunigungssensoren, welche insbesondere zur Bestimmung einer Zentrifugalkraft dienen, welche durch die Unwucht bedingt ist. Die Wuchtmaschine umfasst somit Sensoren zum direkten oder indirekten Bestimmen der Unwucht.

Das Auswuchten der Einheit umfassend die Aufnahme und die wenigstens zwei Einzelmesser ist typischerweise ein statisches Wuchten, es kann aber auch ein dynamisches Wuchten erfolgen. Dies erfolgt typischerweise durch einen Materialauft- und/oder einen Materialabtrag an einer Position wenigstens eines der Einzelmesser welche so angeordnet ist, dass die Unwucht getilgt oder zumindest in ausreichendem Maße reduziert wird.

Bevorzugt ist vorgesehen, dass das Verfahren einen Schritt des vorangehenden Auswählens der Einzelmesser des Einzelmessersatzes aus einer größeren Menge an Einzelmessern aufweist. Dies erfolgt derart, dass die Einzelmesser des Einzelmessersatzes am ehesten die gleiche Masse aufweisen. Mit anderen Worten wird die größere Menge an Einzelmessern bevorzugt so zu wenigstens einem Einzelmesseratz sortiert, dass eine Masseabweichung zwischen den Einzelmessern des wenigstens einen Einzelmessersatzes minimal ist. Dadurch wird der notwendige Materialauf- und/oder Abtrag beim Auswuchten auf ein Minimum reduziert.

Vorzugsweise ist vorgesehen, dass der Einzelmessersatz genau zwei Einzelmesser umfasst. Bei Einzelmessersätzen mit genau zwei Einzelmessern bilden diese ein Paar, wobei die Einzelmesser typischerweise bezüglich einer vorgesehenen Rotationsachse der Aufnahme um 180 Grad zueinander verdreht angeordnet sind. Wenn der Einzelmessersatz genau zwei Einzelmesser umfasst, lässt sich eine gegebenenfalls vorhandene Unwucht besonders genau tilgen.

Gemäß einer bevorzugten Ausgestaltung der Erfindung ist vorgesehen, dass die Einzelmesser Kuttermesser sind und/oder das Rotationsmessersystem ein Kuttermessersystem ist. Somit ist der Einzelmessersatz ein Kuttermessersatz welcher wie auch das Rotationsmessersystem für den Einsatz in einem Kutter, z.B. zur Fleischzerkleinerung und Durchmischung, geeignet ist. Typischerweise umfasst ein Kuttermessersystem mehrere, insbesondere drei, Kuttermessersätze.

Ein Rotationsmessersystem umfasst vorzugsweise mehrere Einzelmessersätze, welche insbesondere axial zueinander versetzt auf dem Messerkopf angeordnet sind. Daher ist es besonders vorteilhaft, wenn die Einzelmessersätze des Rotationsmessersystems jeweils für sich (in ihrer durch das Rotationsmesser vorbestimmten Anordnung) wucht sind. Ein Einzelmessersatz stellt vorzugsweise eine sich wiederholende Einheit des Rotationsmessersystems dar. Die Einzelmessersätze eines Rotationsmessersystems können zwar ident ausgestaltet sein, könnten sich aber auch voneinander unterscheiden.

Gemäß einem weiteren Aspekt der Erfindung wird ein Verfahren zum Herstellen eines Rotationsmessersystems mit einem Messerkopf und wenigstens einem Einzelmessersatz zur Verfügung gestellt. Der Messerkopf dient typischerweise zum Fixieren der Einzelmesser.

Gemäß einer Variante a) wurde der wenigstens eine Einzelmessersatz mittels des erfindungsgemäßen Verfahrens zum Herstellen eines Einzelmessersatzes hergestellt und das Verfahren umfasst ferner einen Schritt des mechanischen Verbindens des wenigstens einen Einzelmessersatzes mit dem Messerkopf. Somit werden ein oder mehrere Einzelmessersätze, welche für sich bereits vorab gewuchtet wurden mit dem Messerkopf des Rotationsmessersystems verbunden, wodurch das Rotationsmessersystem bereits zumindest weitestgehend keine Unwucht aufweist. Der Messerkopf weist dabei typischerweise um eine vorgesehene Rotationsachse des Messerkopfs für sich ebenfalls kein Unwucht auf, wurde also z. B. vorab bereits gewuchtet. Dies stellt ein einfaches Verfahren dar, um mittels eines oder mehrerer bereits gewuchteter Einzelmessersätze und eines gewuchteten Messerkopfes ein unwuchtfreies Rotationsmessersystem herzustellen. Die Aufnahme ist in diesem Fall ein anderes Bauteil als der Messerkopf. Die Aufnahme und der Messerkopf sind also nicht ein und dasselbe Bauteil, obwohl die Aufnahme und der Messerkopf physisch ident, also gleichartig ausgebildet sein können. Somit ist der Messerkopf ein Einzelteil des hergestellten Rotationsmessersystems, während die Aufnahme zur Herstellung beliebig vieler Einzelmessersätze dient.

Dass der wenigstens eine Einzelmessersatz mittels des erfindungsgemäßen Verfahrens zum Herstellen eines Einzelmessersatzes hergestellt wurde, bedeutet insbesondere, dass das Verfahren zum Herstellen eines Rotationsmessersystems die Schritte des Verfahrens zum Herstellen eines Einzelmessersatzes umfasst, also der wenigstens eine Einzelmessersatz mittels des erfindungsgemäßen Verfahrens zum Herstellen eines Einzelmessersatzes hergestellt wird.

Somit wird bevorzugt gemäß der Variante a) ein Verfahren zum Herstellen eines Rotationsmessersystems mit einem Messerkopf und wenigstens einem Einzelmessersatz umfassend wenigstens zwei Einzelmesser zur Verfügung gestellt, wobei das Verfahren die folgenden Schritte umfasst:
- Mechanisches Verbinden des Einzelmessersatzes mit einer Aufnahme zum Fixieren des Einzelmessersatzes;
- Bestimmen einer gegebenenfalls aufgrund des Einzelmessersatzes vorhandenen Unwucht;
- Auswuchten des Einzelmessersatzes wenn die Unwucht größer als eine vorbestimmte, zulässige Unwucht ist, mittels eines Materialauf- und/oder Materialabtrags an wenigstens einem der Einzelmesser; und
- Mechanisches Verbinden des wenigstens einen Einzelmessersatzes mit dem Messerkopf.

Insbesondere ist vorgesehen, dass wenn das Rotationsmessersystem mehrere Einzelmessersätze umfasst, die Schritte des mechanisches Verbindens des Einzelmessersatzes mit einer Aufnahme zum Fixieren des Einzelmessersatzes; des Bestimmens einer gegebenenfalls aufgrund des Einzelmessersatzes vorhandenen Unwucht; und des Auswuchtens des Einzelmessersatzes wenn die Unwucht größer als eine vorbestimmte, zulässige Unwucht ist, mittels eines Materialauf- und/oder Materialabtrags an wenigstens einem der Einzelmesser; so oft wiederholt werden, bis die Einzelmessersätze des Rotationsmessersystems hergestellt sind. Insbesondere umfasst das Verfahren einen Schritt des Lösens des Einzelmessersatzes von der Aufnahme zwischen dem Schritt des Auswuchtens und dem Schritt des mechanischen Verbindens des wenigstens einen Einzelmessersatzes mit dem Messerkopf.

Gemäß einer Variante b) des Verfahrens wird das Rotationsmessersystem mittels des erfindungsgemäßen Verfahrens zum Herstellen eines Einzelmessersatzes hergestellt, wobei die Aufnahme der Messerkopf ist. Somit werden die Verfahrensschritte zum Herstellen des Einzelmessersatzes gleich direkt dazu genutzt, um das Rotationsmessersystem herzustellen, wodurch Arbeitsschritte eingespart werden. Auch gemäß Variante b) ist es von Vorteil, wenn der Messerkopf um eine vorgesehene Rotationsachse des Messerkopfs für sich ebenfalls keine Unwucht aufweist. Der Messerkopf könnte aber auch eine Unwucht aufweisen, welche im Schritt des Auswuchtens ausgewuchtet wird.

Bevorzugt ist vorgesehen, dass der Einzelmessersatz bezüglich des Messerkopfes derart angeordnet wird, dass eine gegebenenfalls aufgrund des Einzelmessersatzes zu erwartende Unwucht minimal ist. Insbesondere ist der Einzelmessersatz bei Variante a) bezüglich des Messerkopfes somit so angeordnet, wie er beim Bestimmen einer gegebenenfalls aufgrund des Einzelmessersatzes vorhandenen Unwucht angeordnet war.

Gemäß einer bevorzugten Ausgestaltung der Erfindung gemäß Variante a) ist vorgesehen, dass das Verfahren ferner die folgenden Schritte umfasst:
- Bestimmen einer gegebenenfalls vorhandenen Rest-Unwucht des Rotationsmessersystems; und
- Auswuchten des Rotationsmessersystems wenn die Rest-Unwucht größer als eine vorbestimmte, zulässige Rest-Unwucht ist, mittels eines Materialauf- und/oder Materialabtrags an wenigstens einem der Einzelmesser.
Somit wird das Rotationsmessersystem nach dem Zusammenbau nochmals vermessen, um sicherzugehen, dass eine gegebenenfalls vorhandene Rest-Unwucht nicht größer als eine vorbestimmte, zulässige Rest-Unwucht ist.

Gemäß einer bevorzugten Ausgestaltung der Erfindung gemäß Variante b) ist vorgesehen, dass wenn das Rotationsmessersystem mehr als einen Einzelmessersatz aufweist, die Einzelmessersätze schrittweise zu dem Rotationsmessersystem hinzugefügt werden und das Durchführen der Schritte des
- Mechanischen Verbindens des Einzelmessersatzes mit dem Messerkopf;
- Bestimmens einer gegebenenfalls aufgrund des Einzelmessersatzes vorhandenen Unwucht; und des
- Auswuchtens des Einzelmessersatzes wenn eine Unwucht größer als eine vorbestimmte, zulässige Unwucht ist, mittels eines Materialauf- und/oder Materialabtrags an wenigstens einem der Einzelmesser;
für jeden einzelnen Einzelmessersatz wiederholt wird.
Dieses schrittweise Zusammenbauen und gegebenenfalls Auswuchten des Rotationsmessersystems hat den Vorteil, dass eine Unwucht je Einzelmessersatz separat bestimmt werden kann. Bei einem Rotationsmessersystem welches mehrere Einzelmessersätze aufweist, wird somit zunächst der erste Einzelmessersatz montiert, auf eine Unwucht überprüft und gegebenenfalls gewuchtet und anschließende erst der zweite Einzelmessersatz montiert, auf eine Unwucht überprüft und gegebenenfalls gewuchtet. Dadurch erfolgt eine besonders genaue Auswuchtung, da insbesondere dynamische Unwuchten so gut wie möglich verhindert werden. Insbesondere weist ein derartiges Rotationsmessersystem mehr als einen Einzelmessersatz auf.

Somit wird bevorzugt gemäß der direkt vorangegangenen, bevorzugten Ausgestaltung ein Verfahren zum Herstellen eines Rotationsmessersystems mit einem Messerkopf und mehr als einem Einzelmessersatz, umfassend jeweils wenigstens zwei Einzelmesser zur Verfügung gestellt, wobei das Verfahren die folgenden Schritte umfasst:
- Mechanisches Verbinden eines der Einzelmessersätze mit dem Messerkopf zum Fixieren des Einzelmessersatzes;
- Bestimmen einer gegebenenfalls, insbesondere aufgrund des Einzelmessersatzes, vorhandenen Unwucht; und
- Auswuchten des Einzelmessersatzes wenn die Unwucht größer als eine vorbestimmte, zulässige Unwucht ist, mittels eines Materialauf- und/oder Materialabtrags an wenigstens einem der Einzelmesser, wobei die Einzelmessersätze schrittweise zu dem Rotationsmessersystem hinzugefügt werden und das Durchführen der genannten Schritte für jeden einzelnen Einzelmessersatz wiederholt wird.

Das Rotationsmessersystem umfasst somit wenigstens zwei Einzelmessersätze, welche schrittweise nacheinander auf dem Messerkopf ausgewuchtet werden, wobei nach Auswuchten des letzten Einzelmessersatzes das erfindungsgemäße Verfahren als beendet angesehen werden kann.

Vorzugsweise ist vorgesehen, dass der Materialauf- und/oder Materialabtrag beim Auswuchten zumindest an einem Anschliff des Einzelmessers erfolgt. Dies ist sowohl beim Verfahren zum Herstellen des Einzelmessersatzes als auch beim Verfahren zum Herstellen des Rotationsmessersystems vorteilhaft. Insbesondere erfolgt der Materialauf- und/oder Materialabtrag zumindest an einer Schneide des Einzelmessers. Somit kann an dem Anschliff, insbesondere der Schneide des Einzelmessers das Auswuchten erfolgen, insbesondere eine Wuchtmarke ausgebildet werden.

Wenn mehrere Einzelmessersätze mit dem Messerkopf verbunden werden, werden die Einzelmessersätze insbesondere entlang einer Rotationsachse des Messerkopfes versetzt zueinander angeordnet.

Ferner wird ein Einzelmessersatz zur Verfügung gestellt, welcher mittels des erfindungsgemäßen Verfahrens zum Herstellen eines Einzelmessersatzes herstellbar oder hergestellt ist. Der Einzelmessersatz umfasst wenigstens zwei Einzelmesser, wobei wenigstens eines der Einzelmesser wenigstens eine Wuchtmarke aufweist. Die Wuchtmarke ist ein Materialauf- oder Materialabtrag am Einzelmesser. Der erfindungsgemäße Einzelmessersatz kann nicht nur dazu dienen, ein möglichst unwuchtfreies Rotationsmessersystem neu herzustellen, sondern er kann auch zum Ersetzen bereits im Betrieb befindlicher Einzelmesser dienen.

Ferner wird ein Rotationsmessersystem zur Verfügung gestellt, welches mittels des erfindungsgemäßen Verfahrens zum Herstellen eines Rotationsmessersystems herstellbar oder hergestellt ist. Das Rotationsmessersystem umfasst einen Messerkopf und wenigstens einen Einzelmessersatz mit wenigstens zwei Einzelmessern. Wenigstens eines der Einzelmesser weist wenigstens eine Wuchtmarke auf. Somit wird ein Rotationsmessersystem zur Verfügung gestellt, welches Schwingungen einer Maschine, z. B. eines Kutters, weitestgehend verhindert.

Bevorzugt ist vorgesehen, dass die Wuchtmarke, oder wenigstens eine Wuchtmarke, an einem Rücken und/oder einem Anschliff (insbesondere einer Schneide) des Einzelmessers angeordnet ist. Diese stellen vordefinierte Flächen dar, über welche die Schwerpunkte jedes Einzelmessers effektiv verschoben und eine gegebenenfalls vorhandene Unwucht des Messersatzes ausgeglichen werden kann. Ferner wäre eine Anordnung der Wuchtmarke auch auf einer Seitenfläche des Einzelmessers, z. B. einer Fasenseite (auch Schneidenseite genannt) oder ihr gegenüberliegenden, glatten Seite, möglich. Zudem ist möglich, dass wenigstens eine Wuchtmarke in einem Aufnahmebereich des Messers angeordnet ist.

Ferner wird eine Schneidmaschine umfassend ein erfindungsgemäßes Rotationsmessersystem zur Verfügung gestellt. Insbesondere ist die Schneidmaschine ein Kutter und das Rotationsmessersystem ein Kuttermessersystem. Die Schneidmaschine zeichnet sich besonders durch ihre Vibrationsarmut im Betrieb und somit eine erhöhte Haltbarkeit aus.

Ferner wird eine Wuchtmaschine zur Verfügung gestellt, welche zur Durchführung des Schritts des Bestimmens der gegebenenfalls vorhandenen Unwucht des erfindungsgemäßen Verfahrens eingerichtet ist, wobei die Wuchtmaschine dazu ausgebildet ist, einen Einzelmessersatz und/oder ein Rotationsmessersystem zum Bestimmen der Unwucht in Rotation zu versetzen. Die Rotation erfolgt insbesondere bei einer vorbestimmten Drehzahl und/oder mit einer Vielzahl von Umdrehungen des Einzelmessersatzes und/oder des Rotationsmessersystems. Vorzugsweise basiert die Wuchtmaschine auf einer direkten oder indirekten Analyse einer durch die Unwucht auftretenden Zentrifugalkraft. Eine solche Wuchtmaschine ermöglicht verglichen mit Wuchtmaschinen, welche sich die Schwerkraft zu Nutze machen, eine komfortablere Bestimmung der Unwucht. Die Unwucht kann eine Unwucht des Einzelmessersatzes, des Rotationsmessersystems oder eine vorangehend beschriebene Rest-Unwucht sein. Die Wuchtmaschine kann auch als eine Vorrichtung zum Bestimmen einer Unwucht bezeichnet werden.

Vorzugsweise weist die Wuchtmaschine eine Aufnahme auf, welche zum Fixieren des Einzelmessersatzes und/oder des Rotationsmessersystems ausgebildet ist. Somit kann insbesondere ohne weitere Adapter der Einzelmessersatz oder das Rotationsmessersystem mit einer Antriebswelle der Wuchtmaschine verbunden werden.

Ferner umfasst die Wuchtmaschine insbesondere eine Ummantelung. Die Ummantelung ist dazu ausgebildet, ein Einzelmesser, welches sich beim Bestimmen der gegebenenfalls aufgrund des Einzelmessersatzes vorhandenen Unwucht gelöst hat, aufzufangen. Bevorzugt umschließt die Ummantelung den Einzelmessersatz beim Bestimmen der Unwucht vollständig, wodurch die Arbeitssicherheit erhöht wird.

Vorzugsweise umfasst die Wuchtmaschine eine Auswerteelektronik, welche dazu eingerichtet ist, die Unwucht zu errechnen. Bevorzugt ist die Wuchtmaschine dazu ausgebildet,
- eine Position für den Materialauf- oder Materialabtrag; und/oder
- eine Masse des Materialauf- oder Materialabtrags;
zum Beseitigen der Unwucht zu errechnen. Nach Auf- oder Abtragen des Materials an der errechneten Position mit der errechneten Masse ist die Unwucht beseitigt. Somit stellt die erfindungsgemäße Wuchtmaschine eine Komplettlösung dar, um die Unwucht möglichst einfach zu bestimmen.

Die erfindungsgemäße Wuchtmaschine kann vorteilhafterweise auch eines oder mehrere der Merkmale und/oder Eigenschaften der Wuchtmaschine, welche bezüglich des Verfahrens zum Herstellen eines Einzelmessersatzes beschrieben wurde, aufweisen. So umfasst die Wuchtmaschine beispielsweise Sensoren.

Weitere bevorzugte Ausgestaltungen der Erfindung ergeben sich aus den übrigen, in den Unteransprüchen genannten Merkmalen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen näher erläutert. Es zeigen:
- Figur 1: einen schematischen Ablauf eines Verfahrens zum Herstellen eines Einzelmessersatzes,
- Figur 2: eine schematische Draufsicht auf eine Aufnahme mit zwei Einzelmessern,
- Figur 3: einen schematischen Ablauf eines Verfahrens zum Herstellen eines Rotationsmessersystems, und
- Figur 4: eine schematische Draufsicht auf ein Rotationsmesser.

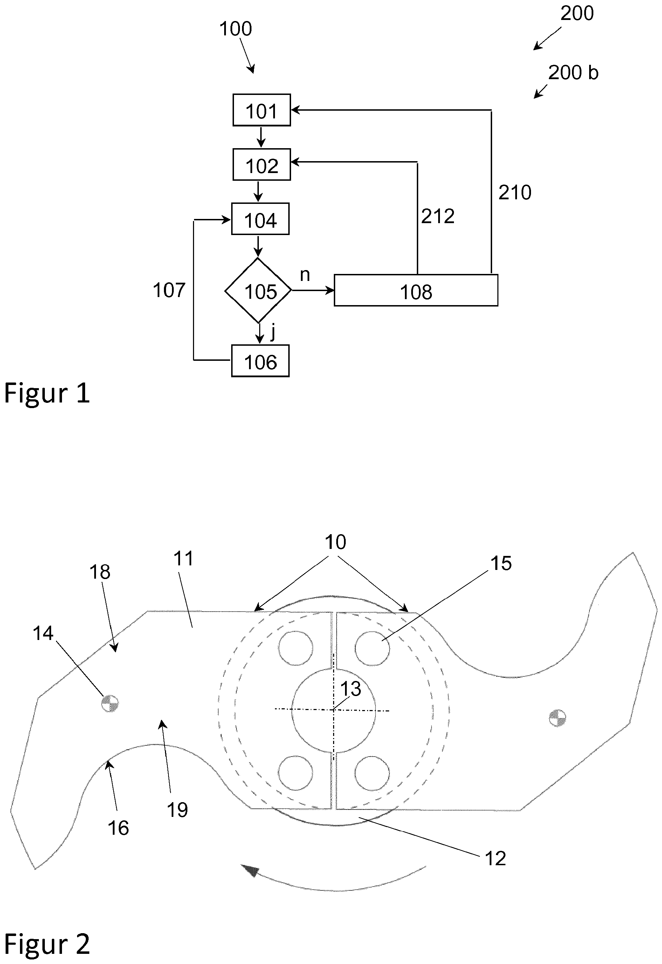

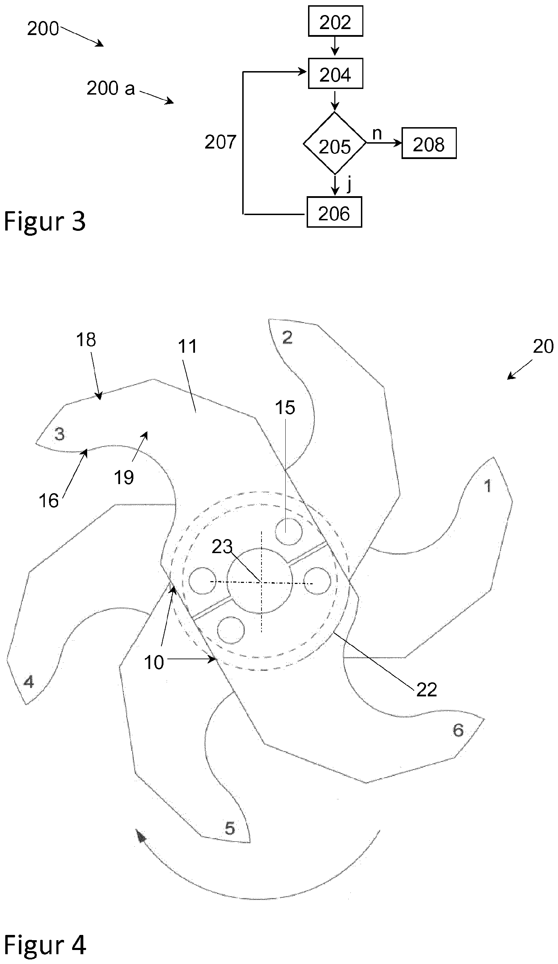

Figur 1 zeigt in Verbindung mit Figur 2 einen schematischen Ablauf eines Verfahrens zum Herstellen eines Einzelmessersatzes 10 mit mehreren Einzelmessern 11 für ein Rotationsmessersystem 20 wie es in Figur 4 ersichtlich ist.

Zunächst werden die Einzelmesser 11 typischerweise soweit mechanisch gefertigt, wie sie bisher innerhalb eines Rotationsmessersystems 20 verwendet wurden. Anschließend kann das Verfahren einen Schritt des Auswählens der Einzelmesser 11 des Einzelmessersatzes 10 aus einer größeren Menge an Einzelmessern aufweist. Die Einzelmesser 11 werden also so nach deren Masse sortiert, dass eine zu erwartende Unwucht minimal ist.

In einem Schritt 102 erfolgt ein mechanisches Verbinden des Einzelmessersatzes 10 mit einer Aufnahme 12 zum Fixieren des Einzelmessersatzes 10. Die Aufnahme 12 dient als Adapter um die Einzelmesser 11 z. B. auf einer Wuchtmaschine montieren und deren Unwucht bestimmen zu können. Wie in Figur 2 ersichtlich ist, wird der Einzelmessersatz 10 so zur Aufnahme 12 angeordnet, wie er auch in einem Rotationsmessersystem 20 zu einem Messerkopf 22 des Rotationsmessersystems 20 angeordnet wäre. Die beiden Einzelmesser 11 sind also in einer Ebene rechtwinkelig zu einer vorbestimmten Rotationsachse 13 der Aufnahme angeordnet und bezüglich der Rotationsachse 13 um 180 Grad zueinander versetzt. Ferner sind die Einzelmesser 11 gleichsinnig orientiert und weisen den selben radialen Abstand von der Rotationsachse 13 auf. Dadurch wird gewährleistet, dass eine Unwucht durch die Einzelmesser 11 minimal ist.

Anschließend erfolgt ein Bestimmen 104 einer gegebenenfalls aufgrund des Einzelmessersatzes 10 vorhandenen Unwucht. Die Aufnahme 12 weist dazu keine Unwucht auf, die Aufnahme 12 wurde also z. B. bereits vorab gewuchtet. Somit kann die beim Bestimmen 104 der Unwucht festgestellte Unwucht eindeutig auf die Einzelmesser 11 zugeordnet werden. Das Bestimmen der Unwucht erfolgt typischerweise auf einer Wuchtmaschine. Ferner könnte dies aber auch erfolgen, indem die Aufnahme 12 so drehbar gelagert wird, dass deren Rotationsachse 13 (in Figur 2 rechtwinkelig zur Zeichenebene, also projizierend dargestellt) horizontal ausgerichtet ist und durch die Schwerkraft die Unwucht bestimmt werden kann.

Nach dem Schritt 104 des Bestimmens der Unwucht wird in einer Auswahl 105 entschieden, ob eine gegebenenfalls festgestellte Unwucht größer als eine vorbestimmte, zulässige Unwucht ist. Sollte dies der Fall sein, erfolgt ein Auswuchten 106 des Einzelmessersatzes 10 mittels eines Materialauf- und/oder Materialabtrags an wenigstens einem der Einzelmesser 11. Dadurch wird eine Position des Schwerpunkts 14 eines der Einzelmesser 11 so verschoben, dass die Unwucht ausgeglichen wird. Der Schwerpunkt kann versetzt werden, indem ein gezielt positionierter Materialabtrag (oder auch ein Materialauftrag) ein einem der Einzelmesser 11 vorgenommen wird. Dies erfolgt insbesondere an einem, z. B. balligen, Anschliff 18 oder Rücken 16 des Einzelmessers. Ferner kann dies auch an den beiden Seitenflächen 19 des Einzelmessers 11 erfolgen. Der Materialauf- oder Materialabtrag ist typischerweise in Form von Wuchtmarken erkennbar. Sie sind typischerweise erkennbar, indem die Einzelmesser 11 eines Einzelmessersatzes 10 miteinander verglichen werden.

Wenn im dargestellten Beispiel eine Verbindungsgerade der beiden Schwerpunkte 14 durch die Rotationsachse 13 verläuft und die beiden Schwerpunkte 14 beispielsweise bei gleicher Masse der Einzelmesser 11 denselben Normalabstand von der Rotationsachse 13 aufweisen, weist der Einzelmessersatz 10 keine statische Unwucht mehr auf. Sollten die Massen leicht voneinander abweichen, müssen auch die Normalabstände der Schwerpunkte 14 entsprechend voneinander abweichen, damit keine Unwucht vorhanden ist. Da im dargestellten Fall die beiden Einzelmesser 11 und somit auch näherungsweise die Schwerpunkte 14 in einer Ebene rechtwinkelig zur Rotationsachse 13 angeordnet sind, die Verbindungsgerade also rechtwinkelig zur Rotationsachse 13 angeordnet ist, tritt auch keine dynamische Unwucht auf.

Anschließend kann gemäß dem Pfad 107 das Verfahren nochmals die Schritte 104, 105 durchlaufen, um zu überprüfen, ob die Unwucht nun tatsächlich beseitigt wurde. Gegebenenfalls kann im Schritt 106 nochmals nachgebessert werden.

Wurde mittels der Auswahl 105 festgestellt, dass die gegebenenfalls vorhandene Unwucht nicht größer als die vorbestimmte, zulässige Unwucht ist, so weist der Einzelmessersatz 10 keine oder eine ausreichend geringe Unwucht auf und das Verfahren 100 ist in einem Schritt 108 beendet.

Figur 3 zeigt in Verbindung mit Figur 4 einen schematischen Ablauf eines Verfahrens zum Herstellen eines Rotationsmessersystems 20 gemäß einer Variante a) des Verfahrens. Das Rotationsmessersystem 20 kann, wie in Figur 4 gezeigt, beispielsweise drei Einzelmessersätze 10 mit jeweils zwei Einzelmessern 11 aufweisen. Die Einzelmesser 11 eines jeden Einzelmessersatzes sind paarweise gegenüberliegend innerhalb einer rechtwinkelig zu einer Rotationsachse 23 des Messerkopfs 22 verlaufenden Ebene angeordnet. Die Ebenen der einzelnen Messersätze 10 sind dabei zueinander in einer achsialen Richtung der Rotationsachse 23 versetzt. In der Draufsicht gemäß Figur 4 umfasst ein erster Einzelmessersatz 10 die Einzelmesser 11 mit den Nummern 1 und 4 und ist der in der Draufsicht unterste Einzelmessersatz 10. Darüber ist ein zweiter Einzelmessersatz 10 mit den Einzelmessern 11 mit den Nummern 2 und 5 angeordnet. Der in der Draufsicht oberste Einzelmessersatz 10 wird durch die Einzelmesser mit den Nummern 3 und 6 gebildet.

Das Verfahren zum Herstellen eines Rotationsmessersystems 20 weist nun einen Schritt 202 des mechanischen Verbindens des wenigstens einen Einzelmessersatzes 10 mit dem Messerkopf 22 auf. Im dargestellten Beispiel gemäß Figur 4 werden somit zunächst die Einzelmesser 1 und 4, anschließend die Einzelmesser 2 und 5 und schließlich die Einzelmesser 3 und 6 mit dem Messerkopf verbunden. Das mechanische Verbinden mit dem Messerkopf 22 kann wie auch mit der Aufnahme 12 formschlüssig und/oder reibschlüssig erfolgen. Beispielsweise können die Einzelmesser 10 Aussparungen aufweisen, mittels welcher die Einzelmesser auf Bolzen 15 der Aufnahme 12 oder des Messerkopfes 22 geschoben werden. Somit sind die Einzelmesser sowohl radial als auch in einer Richtung axial (bezogen auf die jeweilige Rotationsachse 13 oder 23) formschlüssig durch die Aufnahme 12 oder den Messerkopf 22 fixiert. Die Fixierung in der zweiten axialen Richtung erfolgt beispielsweise mittels einer, z. B. hydraulisch spannbaren, Zentralmutter (nicht gezeigt).

Um sicher zu gehen, dass das Rotationsmessersystem 20 nicht durch die Montage eine Unwucht bekommen hat, kann anschließend ein Schritt des Bestimmens 204 einer gegebenenfalls vorhandenen Rest-Unwucht des Rotationsmessersystems 20 erfolgen.

Anschließend wird in einer Abfrage 205 festgestellt, ob die Rest-Unwucht größer als eine vorbestimmte, zulässige Rest-Unwucht ist. Sollte dies der Fall sein, erfolgt in einem Schritt 206 ein Auswuchten des Rotationsmessersystems 20, mittels eines Materialauf- und/oder Materialabtrags an wenigstens einem der Einzelmesser 11. Über den Pfad 207 kann das Verfahren mit den Schritten 204 und 205 wiederholt werden, um festzustellen, ob eine gegebenenfalls vorhandene Restunwucht eine zulässige Rest-Unwucht nun nicht mehr übersteigt.

Wenn die bestimmte Rest-Unwucht nicht größer als die zulässige Rest-Unwucht ist, ist das Verfahren mit dem Schritt 208 beendet und das Rotationsmessersystem hergestellt.

Gemäß einer Variante b) können die Verfahrensschritte zur Herstellung des Einzelmessersatzes 10 auch zur Herstellung des Rotationsmessersystems 20 dienen. Dazu ist die Aufnahme 12 ein Messerkopf 22. Auch hier weist der Messerkopf 22 typischerweise keine Unwucht auf. Prinzipiell könnte aber gemäß der Variante b) der Messerkopf eine Unwucht aufweisen, welche dann beim Wuchten des Einzelmessersatzes beseitigt werden würde.

Gemäß dem Verfahren 200 b werden zunächst für den ersten Einzelmessersatz 10 mit den Einzelmessern 11 der Nummern 1 und 4 die obenstehend beschriebenen Schritte 101 bis 108 durchgeführt, wobei diesmal die Einzelmesser 11 mit dem Messerkopf 22 des Rotationsmessersystems 20 mechanisch verbunden werden. Wenn die Unwucht des Messerkopfes 22 mitsamt dem ersten Einzelmessersatz 10 nicht (mehr) größer als eine vorbestimmte, zulässige Unwucht ist, beginnt das Verfahren 200 b über den Pfad 210 erneut von vorne, indem im Schritt 101 ein zweiter Einzelmessersatz 10 mit den Einzelmessern der Nummern 2 und 5 ausgewählt und im Schritt 102 dieser Einzelmessersatz 10 mit dem Messerkopf 20 mechanisch verbunden wird. Anschließend werden wieder die Schritte 104 und 105 und gegebenenfalls 106 und 107 durchlaufen bis der zweite Einzelmessersatz 10 fertig ist. Eine weitere Wiederholung über den Pfad 210 erfolgt für den dritten Einzelmessersatz 10 mit den Einzelmessern der Nummern 3 und 6. Der Pfad 210 wird somit so oft benutzt, bis das Rotationsmessersystem 20 alle Einzelmessersätze 10 (z. B. drei Stück mit insgesamt sechs Einzelmessern 11) aufweist und das Verfahren 200 b zur Herstellung des Rotationsmessersystems 20 beendet ist.

Der Schritt 101 kann alternativ übrigens auch im Voraus für alle Einzelmesser 11 des Rotationsmessersystems 20 erfolgen (Pfad 212).

Prinzipiell wäre es auch möglich, dass alle Einzelmesser 11 des Rotationsmessersystems 20 vor dem Bestimmen 104 der Unwucht mit dem Messerkopf 22 mechanisch verbunden werden (es wird somit kein Pfad 210 oder 212 benötigt). Sollen allerdings auch gegebenenfalls vorhandene dynamische Unwuchten beseitigt werden, gestaltet sich dies in diesem Fall komplexer als wenn die statischen Unwuchten für jeden Einzelmessersatz separat ausgeglichen werden, da durch das separate Auswuchten eines jeden Einzelmessersatzes typischerweise auch dynamische Unwuchten des Rotationsmessersystems 20 verhindert werden.

Zusammenfassend kann festgestellt werden, dass erfindungsgemäß einfach umzusetzende Verfahren zum Wuchten eines Einzelmessersatzes 10 oder eines Rotationsmessersystems 20 zur Verfügung gestellt wurden, mittels welchen ein Einzelmessersatz 10 oder ein Rotationsmessersystem 20 hergestellt werden. Solche Einzelmesser 11 eines Einzelmessersatzes 10 eignen sich besonders als Kuttermesser 11. Ebenso eignen sich die erfindungsgemäß hergestellten Rotationsmessersysteme 20 insbesondere als Kuttermessersysteme 20. Selbst bei Drehzahlen des Kuttermessersystems 20 von 5000 bis 6000 Umdrehungen pro Minute werden effektiv Schwingungen eines Kutters oder Messerbrüche verhindern.

### Bezugszeichenliste

- 1 bis 6: Einzelmessernummern

- 10: Einzelmessersatz / Kuttermessersatz
- 11: Einzelmesser / Kuttermesser
- 12: Aufnahme
- 13: Rotationsachse der Aufnahme
- 14: Schwerpunkt eines Einzelmessers
- 15: Bolzen
- 16: Rücken
- 18: Anschliff
- 19: Seitenfläche
- 20: Rotationsmessersystem / Kuttermessersystem
- 22: Messerkopf
- 23: Rotationsachse des Messerkopfs

- 100: Verfahren zum Herstellen eines Einzelmessersatzes
- 101: Schritt des Auswählens der Einzelmesser
- 102: Schritt des Mechanisches Verbinden des Einzelmessersatzes mit einer Aufnahme
- 104: Schritt des Bestimmens einer gegebenenfalls vorhandenen Unwucht
- 105: Auswahl
- 106: Schritt des Auswuchtens
- 107: Überprüfungspfad
- 108: Ende des Verfahrens zum Herstellen eines Einzelmessersatzes

- 200: Verfahren zum Herstellen eines Rotatinsmessersystems
- 200 a: Variante a) des Verfahrens
- 200 b: Variante b) des Verfahrens
- 202: Schritt des Mechanisches Verbinden des Einzelmessersatzes mit einem Messerkopf
- 204: Schritt des Bestimmens einer gegebenenfalls vorhandenen Unwucht
- 205: Auswahl
- 206: Schritt des Auswuchtens
- 207: Überprüfungspfad
- 210: Wiederholungspfad
- 208: Ende des Verfahrens zum Herstellen eines Einzelmessersatzes
- 210: Wiederholungspfad bei mehreren Einzelmessersätzen pro Rotationsmessersystem
- 212: Wiederholungspfad bei mehreren Einzelmessersätzen pro Rotationsmessersystem

## Patentansprüche

1. Verfahren (100) zum Herstellen eines Einzelmessersatzes (10) mit wenigstens zwei Einzelmessern (11) für ein Rotationsmessersystem (20), umfassend die folgenden Schritte:
- Mechanisches Verbinden (102) des Einzelmessersatzes (10) mit einer Aufnahme (12) zum Fixieren des Einzelmessersatzes (10);
- Bestimmen (104) einer gegebenenfalls aufgrund des Einzelmessersatzes (10) vorhandenen Unwucht; und
- Auswuchten (106) des Einzelmessersatzes (10) wenn die Unwucht größer als eine vorbestimmte, zulässige Unwucht ist, mittels eines Materialauf- und/oder Materialabtrags an wenigstens einem der Einzelmesser (11).

2. Verfahren (100) nach Anspruch 1, umfassend einen Schritt (101) des vorangehenden Auswählens der Einzelmesser (11) des Einzelmessersatzes (10) aus einer größeren Menge an Einzelmessern (11), derart, dass die Einzelmesser (11) des Einzelmessersatzes (10) am ehesten die gleiche Masse aufweisen.

3. Verfahren (100) nach einem der vorhergehenden Ansprüche, wobei die Einzelmesser (11) Kuttermesser (11) sind und das Rotationsmessersystem (20) ein Kuttermessersystem (20) ist.

4. Verfahren (200) zum Herstellen eines Rotationsmessersystems (20) mit einem Messerkopf (22) und wenigstens einem Einzelmessersatz (10), wobei
a) der wenigstens eine Einzelmessersatz (10) mittels des Verfahrens (100) nach einem der Ansprüche 1 bis 3 hergestellt wurde und das Verfahren (200 a) einen Schritt (202) des mechanischen Verbindens des wenigstens einen Einzelmessersatzes (10) mit dem Messerkopf (22) aufweist; oder
b) das Rotationsmessersystem (20) mittels des Verfahrens (100) nach einem der Ansprüche 1 bis 3 hergestellt wird, wobei die Aufnahme (10) der Messerkopf (22) ist.

5. Verfahren (200) nach Anspruch 4 a), wobei das Verfahren ferner die folgenden Schritte umfasst:
- Bestimmen (204) einer gegebenenfalls vorhandenen Rest-Unwucht des Rotationsmessersystems (20); und
- Auswuchten (206) des Rotationsmessersystems (20) wenn die Rest-Unwucht größer als eine vorbestimmte, zulässige Rest-Unwucht ist, mittels eines Materialauf- und/oder Materialabtrags an wenigstens einem der Einzelmesser (11).

6. Verfahren (200) nach Anspruch 4 b), wobei wenn das Rotationsmessersystem (20) mehr als einen Einzelmessersatz (10) aufweist, die Einzelmessersätze (10) schrittweise zu dem Rotationsmessersystem (20) hinzugefügt werden und das Durchführen der Schritte des
- Mechanischen Verbindens (102) des Einzelmessersatzes (10) mit dem Messerkopf (22);
- Bestimmens (104) einer gegebenenfalls aufgrund des Einzelmessersatzes (10) vorhandenen Unwucht; und des
- Auswuchtens (106) des Einzelmessersatzes (10) wenn eine Unwucht größer als eine vorbestimmte, zulässige Unwucht ist, mittels eines Materialauf- und/oder Materialabtrags an wenigstens einem der Einzelmesser (10);
für jeden einzelnen Einzelmessersatz (10) wiederholt wird.

7. Verfahren (100, 200) nach einem der Ansprüche 1 bis 6, wobei der Materialauf- und/oder Materialabtrag beim Auswuchten zumindest an einem Anschliff (18) des Einzelmessers (10) erfolgt.

8. Verfahren (100, 200) nach einem der Ansprüche 1 bis 7, wobei der Schritt des Bestimmens (104, 204) der gegebenenfalls vorhandenen Unwucht mittels einer Wuchtmaschine erfolgt, welche den Einzelmessersatz (10) oder das Rotationsmessersystem (20) zum Bestimmen der Unwucht in Rotation versetzt.

9. Verfahren (100, 200) nach Anspruch 8, wobei eine Auswerteelektronik der Wuchtmaschine die Unwucht errechnet.

10. Verfahren (100, 200) nach einem der Ansprüche 8 oder 9, wobei die Wuchtmaschine
- eine Position für den Materialauf- oder Materialabtrag; und/oder
- eine Masse des Materialauf- oder Materialabtrags;
zum Beseitigen der Unwucht errechnet.

11. Einzelmessersatz (10) für ein Rotationsmessersystem (20), hergestellt mittels eines Verfahrens nach einem der Ansprüche 1 bis 3, umfassend wenigstens zwei Einzelmesser (11), wobei wenigstens eines der Einzelmesser (11) wenigstens eine Wuchtmarke aufweist, wobei die Wuchtmarke ein Materialauf- oder Materialabtrag ist.

12. Rotationsmessersystem (20), hergestellt mittels eines Verfahrens nach einem der Ansprüche 4 bis 10, mit einem Messerkopf (22) und wenigstens einem Einzelmessersatz (10) umfassend wenigstens zwei Einzelmesser (11), wobei wenigstens eines der Einzelmesser (10) wenigstens eine Wuchtmarke aufweist, wobei die Wuchtmarke ein Materialauf- oder Materialabtrag ist.

13. Einzelmessersatz (10) nach Anspruch 11 oder Rotationsmessersystem (20) nach Anspruch 12, wobei wenigstens eine Wuchtmarke an einem Rücken (16) und/oder einem Anschliff (18) des Einzelmessers (11) angeordnet ist.

14. Wuchtmaschine, welche zur Durchführung des Schritts des Bestimmens (104, 204) der gegebenenfalls vorhandenen Unwucht nach einem der Ansprüche 1 bis 10 eingerichtet ist, wobei die Wuchtmaschine dazu ausgebildet ist, einen Einzelmessersatz (10) und/oder ein Rotationsmessersystem (20) zum Bestimmen der Unwucht in Rotation zu versetzen.

15. Wuchtmaschine nach Anspruch 14, wobei die Wuchtmaschine eine Aufnahme (12) aufweist, welche zum Fixieren des Einzelmessersatzes (10) und/oder des Rotationsmessersystems (20) ausgebildet ist.
